# FASCICULE DE BREVET EUROPEEN

(11) **EP 2 117 296 B1**
(45) Date de publication et mention de la délivrance du brevet: **12.01.2011**
(21) Numéro de dépôt: 08775625.0
(22) Date de dépôt: 04.03.2008
(51) Int. Cl.: A01K 1/015

(54) **INSTALLATION AUTONOME D'EPANDAGE DE PRODUITS DE LITIERE**
AUTONOME ANLAGE ZUR VERTEILUNG VON EINBETTUNGSPRODUKTEN
AUTONOMOUS INSTALLATION FOR SPREADING BEDDING PRODUCTS

(30) Priorité: 04.03.2007 FR 0701565
(43) Date de publication de la demande: 18.11.2009
(73) Titulaire: Dussau Distribution Sas, 40320 Pecorade (FR); Dussau, Christian, 40320 Samadet (FR)
(72) Inventeur: DUSSAU, Christian, F-40320 Samadet (FR)
(74) Mandataire: Ravina, Bernard
(86) Numéro de dépôt international: PCT/FR2008/000285
(87) Numéro de publication internationale: WO 2008/132306

(56) Documents cités:
- EP-A- 0 970 607
- WO-A-98/24303
- CA-A1- 2 449 345
- US-A- 3 306 674
- US-A- 3 577 956
- US-A- 4 617 876

## Description

### Domaine technique.

La présente invention est du domaine des matériels utilisés pour la formation et ajouts de litières dans les locaux d'élevage et a pour objet une installation autonome d'épandage de produits de litières sur l'aire d'élevage, cet épandage pouvant être opéré en présence des animaux.

### Etat de la technique antérieure.

Un des objectifs permanents des éleveurs est l'automatisation des diverses tâches à accomplir dans l'activité d'élevage afin de réduire la main-d'oeuvre nécessaire ou mieux utiliser cette dernière. Une autre raison qui incite les éleveurs à automatiser les diverses tâches est la pénibilité de ces dernières.

Actuellement la plupart des tâches sont automatisées ce qui permet un gain de temps notable et une réduction des charges d'exploitation particulièrement importantes. Ainsi sont notamment automatisées la traite des animaux, la distribution des aliments et de l'eau, et le nettoyage des aires d'élevage.

Mais à ce jour aucune solution relative à une automatisation intégrale de la formation des litières n'a été proposée alors que cette tâche est considérée par la profession comme une des plus pénibles, une des plus dispendieuses en temps et une des plus importantes puisque l'état sanitaire de la litière conditionne le niveau sanitaire de l'élevage et de chaque animal. Il faut savoir que le niveau sanitaire est pour toutes les espèces élevées celui qui a le plus d'influence sur les performances de l'élevage et sur ses coûts. À titre d'exemple, un niveau sanitaire satisfaisant se traduira par moins de pertes et par une forte réduction de l'usage de produits antibiotiques. En revanche, une litière trop dégradée est porteuse de germes infectieux pouvant être à l'origine d'une mortalité importante dans la population animale.

Il est admis aujourd'hui que le parfait état d'une litière augmente dans des proportions importantes les résultats techniques et économiques de l'élevage. Il découle de ce constat l'obligation de remplacer fréquemment la litière ou de rapporter par apport successif des produits de litière, avant qu'elle n'atteigne un degré de dégradation tel qu'elle constitue un milieu favorable au développement d'agents pathogènes. Ainsi la litière pour un élevage de bovins doit être renouvelée deux fois par jour de façon à réduire le risque de mammite. Pour un élevage de palmipèdes, le paillage doit être renouvelé une fois par jour pour améliorer grandement les conditions dans lesquelles les palmipèdes sont élevés et par voie de conséquence, améliore le rendement de l'élevage. Pour des élevages de dindes et poulets, des ajouts réguliers de petites quantités de produits de litière, tous les deux à trois jours permet de maintenir la litière dans un état approprié et sont préférables à un ajout plus important une fois chaque semaine par exemple.

Actuellement, compte tenu de leurs performances et possibilités, les matériels connus ne sont pas aptes à réaliser des opérations de rajout de litière en présence des animaux d'une manière précise, rapide, aisée et efficace et encore moins d'une manière automatique. Comme un épandage à la main, est exclu notamment en raison du manque de rapidité, du coût important de la main-d'oeuvre, et de la pénibilité de cette tâche, le renouvellement de la litière n'est pas effectué aussi souvent que nécessaire. Parfois, même, il n'est pas du tout effectué.

Les faibles performances des matériels sont dues notamment au fait que ces derniers ne sont pas adaptés à la manutention mécanique sur longue distance des produits de litières qui sont habituellement des produits ligneux ou fibreux. De plus le rajout de la litière, pour être efficace et optimal, nécessite une répartition précise dans des locaux d'élevage, répartition conditionnée par certaines caractéristiques des zones à recouvrir. Ainsi les zones dites humides, par exemple celles situées sous les abreuvoirs, les alimentateurs et autres, nécessitent une couche plus importante de litière ou bien une litière d'un type différent présentant des capacités d'absorption plus importantes.

En règle générale pour les élevages de volailles, de porcs, de bovins, d'ovins et caprins, les surfaces à couvrir par la litière sont importantes. La formation de la litière fait donc appel à trois opérations combinées, à savoir une opération de dévoutage du produit de litière dans le moyen de stockage de ce dernier, une opération de transport du produit de litière et une opération de répartition de ce dernier sur l'aire d'élevage. Le matériel utilisé, qui est du genre automobile avec poste de pilotage, possède donc un moyen de stockage du produit de litière, des moyens de dévoutage et des moyens de répartition de ces produits. De plus ce matériel doit circuler dans le local d'élevage pour répandre le produit de litière. II n'est pas toujours possible ni quelquefois même souhaitable d'évacuer les animaux des locaux d'élevage en vue des rajouts de litière. C'est notamment le cas lorsque des contraintes réglementaires imposent le confinement des animaux dans leurs locaux d'élevage. Cet aussi le cas des ateliers industriels où les animaux sont toujours confinés à l'intérieur. C'est aussi le cas des locaux d'élevage de jeunes animaux pour lesquels des conditions strictes de températures à l'intérieur de ces locaux doivent être maintenues. Dans ces différents cas, le matériel d'épandage est amené à circuler parmi la population animale ou à proximité immédiate. La circulation de ce matériel dans le local nécessite la présence de tierces personnes en plus du conducteur pour écarter les animaux de la trajectoire du matériel d'épandage. Habituellement il est nécessaire d'employer deux à trois personnes pour cette opération de sorte que l'épandage dans un local d'élevage, en présence des animaux, nécessite encore et ce malgré l'utilisation de matériels spécifiques, une main-d'oeuvre relativement importante.

Les matériels connus, pour assurer leur propulsion, sont habituellement équipés de monteurs thermiques dont le principal inconvénient et de générer des gaz nocifs qu'il est nécessaire d'évacuer aussi rapidement que possible du local d'élevage afin d'écarter les risques d'asphyxie tant du personnel que des animaux comme décrit dans le document WO-A-9824303. Par ailleurs le niveau sonore de ces moteurs thermiques est tel qu'il peut paniquer les animaux. Ces mouvements de panique peuvent être à l'origine de nombreux étouffements par attroupement.

En outre la température élevée du bloc moteur et les particules incandescentes que peuvent véhiculer les gaz d'échappement peuvent être à l'origine d'incendie. Il y a lieu de souligner que tant la nature même des produits de litière, bien souvent de la paille, que leur degré de dessiccation accroissent de manière importante le danger d'incendie.

Les débits élevés d'épandage engendrent d'importants nuages de poussières qui polluent l'atmosphère du local et perturbent les fonctions respiratoires des animaux et du personnel présent.

De surcroît les matériels connus n'offrent pas de possibilité de réaliser un épandage sélectif par zones, aussi bien en termes de quantité de litière que de composition ou d'adjonction de produits spécifiques.

Enfin le danger des matériels connus est l'introduction dans le local d'élevage, par leurs organes de roulement, d'agents pathogènes externes.

On connaît aussi de l'état de la technique des matériels de paillage suspendus à des rails, dotés d'une réserve embarquée de produits et d'un moyen de distribution. L'inconvénient de cette technologie est qu'elle exige des ossatures porteuses particulièrement résistantes afin de supporter, sans se déformer, le poids du matériel et du produit embarqué. La mise en oeuvre d'une telle technique engendre des coûts relativement importants. En outre chaque bâtiment d'élevage devra être équipé de son propre matériel d'épandage ce qui multiplie les coûts de mise en oeuvre. De surcroît l'opération de chargement de la réserve de produit s'effectue en hauteur de sorte que cette opération est particulièrement contraignante voire dangereuse.

On connaît aussi de l'état de la technique un appareil de distribution de produits de litière comprenant une chaîne à disques mobile dans une chemise de confinement dotée d'ouvertures de délivrance pouvant être obturées plus ou moins par des trappes mobiles à réglage manuel. L'inconvénient de ce genre de matériel est qu'il n'effectue pas d'épandage des produits de litières c'est-à-dire une répartition homogène de ce produit sur une surface donnée. Au contraire la distribution est ponctuelle et le produit devra ensuite être étalé sur la surface.

Il est relativement difficile de régler le degré d'ouvertures des trappes pour obtenir une distribution à débit égal d'une ouverture de délivrance à l'autre.

Avec ce genre de matériel, une distribution dans des angles de bâtiments s'avère impossible à réaliser. Par ailleurs ce genre d'appareil se révèle coûteux.

### Exposé de l'invention.

La présente invention a pour objet d'apporter une solution aux problèmes sus évoqués en proposant une installation d'épandage de produits de litière possédant une grande autonomie et qui n'exige pour son fonctionnement aucune présence humaine.

Un autre but de la présente invention est une installation d'épandage de produits de litière dont la mise en oeuvre dans un bâtiment d'élevage se trouve simplifiée et ne requiert aucune ossature porteuse spécifique.

Un autre but de la présente invention est une installation d'épandage de produits de litière avec laquelle est écarté le risque de pollution de l'atmosphère du local d'élevage avec des gaz nocifs.

Un autre but de la présente invention est une installation d'épandage de produits de litière avec laquelle est écarté le risque d'incendie.

Un autre but de la présente invention est la mise en oeuvre d'une installation d'épandage de produits de litière, apte à assurer une distribution uniforme des produits de litière et ce qu'elle que soit la topologie et la position de la surface à recouvrir.

Un autre but de la présente invention est la mise en oeuvre d'une installation d'épandage de produits de litière avec laquelle les risques d'infection du local par des agents pathogènes externes est fortement réduit.

À cet effet l'installation autonome d'épandage de produits de litière tels que pailles, sciures, copeaux de bois et autres se caractérise essentiellement en ce qu'elle comprend :
- une tête d'épandage de produits de litière installée dans le local d'élevage,
- des moyens de déplacement de la tête d'épandage dans le local d'élevage, selon un trajet préétabli,
- une réserve de produits de litière, installée à poste fixe à distance de la tête d'épandage,
- un moyen de manutention pneumatique raccordé d'une part à la réserve de produits de litière et d'autre part à la tête d'épandage pour transporter les produits contenus dans la réserve vers la tête d'épandage, ce moyen comportant une conduite d'alimentation de la tête d'épandage en produit de litière et un sas de mise en pression installé entre la réserve et la conduite.

On comprend qu'avec une telle configuration les éléments les plus lourds de l'installation demeurent à poste fixe et à l'extérieur du bâtiment et que seuls les éléments légers de cette installation, notamment la tête d'épandage et la conduite pneumatique, sont déplacés le long du trajet imposé. On réduit ainsi de manière particulièrement significative les dépenses énergétiques par rapport aux matériels de l'art antérieur dont notamment la réserve de produits et la tête d'épandage sont installées sur une structure commune.

La conduite souple, qui peut être de longueur importante, supérieure à 15 mètres, sera de diamètre réduit, compris de préférence entre 60 et 80 mm, de façon à réduire son volume interne et par voie de conséquence la quantité d'air requise pour assurer le transport des produits de litière vers la tête d'épandage. Cette disposition à également pour conséquence de réduire le dégagement de poussière.

La manutention des produits s'effectue préférentiellement en phase dense c'est-à-dire sous une pression d'air comprise entre 0,2 et 2 bars.

Avec une telle configuration d'installation, la tête d'épandage peut demeurer toujours dans le local d'élevage alors que la réserve et le moyen de manutention pneumatique ainsi qu'éventuellement le moyen de dévoutage et le moyen de broyage, hormis la conduite souple d'alimentation, peuvent demeurer à l'extérieur du local d'élevage, ce qui réduit les risques d'infection de ce local par des agents pathogènes.

Selon une autre caractéristique de l'invention, l'installation comprend de plus une unité centrale de contrôle et de commande connectée électriquement par voie filaire ou hertzienne à la tête d'épandage, aux moyens de déplacement et au moyen de manutention, cette unité étant apte à piloter la tête d'épandage dans ces différents mouvements ainsi que le moyen de manutention.

Selon une première forme de réalisation, l'unité de contrôle et de commande pourra être embarquée sur la tête d'épandage tandis que, selon une autre forme de réalisation, l'unité de contrôle et de commande est installée sur la partie à poste fixe de l'installation d'épandage.

Cette unité centrale de contrôle et de commande confère à l'installation une grande autonomie qui lui permet de fonctionner sans présence humaine.

Selon une autre caractéristique de l'invention, l'installation d'épandage comporte des moyens de repérage de la position spatiale de la tête d'épandage dans le local d'élevage, ces moyens étant électriquement connectés à l'unité centrale de contrôle et de commande.

Ainsi cette unité de contrôle et de commande, en fonction des informations préprogrammées, puis celles reçues relatives à la position spatiale de la tête d'épandage dans le local ou bien relatives à des paramètres propres à l'état de la litière, pourra réguler la distribution des produits sur l'aire d'élevage. Par exemple, les zones dites humides pourront recevoir une couche de produits de litière plus importante que les zones sèches ou des produits de litière de différentes natures ou bien encore des additifs du genre produit phytosanitaire et autres. On comprend qu'en raison de cette disposition, il est possible d'assurer un épandage sélectif par zones et de maintenir la litière dans un état sanitaire optimal.

Les données relatives aux paramètres propres à la litière pourront être délivrés, selon une autre caractéristique de l'invention, par des moyens d'évaluation en continu de la qualité de la litière, ces moyens comportant des capteurs mesurant non limitativement, pour les différentes zones du local, la température de la litière et son degré d'humidité.

Selon une autre caractéristique de l'invention, ces-données sont complétées par des données relatives à l'ambiance du local délivrées par des moyens de mesure de paramètres propres à cette ambiance.

Selon une autre caractéristique de l'invention, la tête d'épandage ou un élément associé à cette tête et déplaçable avec cette dernière dans le local d'élevage est doté de moyens de surveillance à distance.

Selon encore une autre caractéristique de l'invention, la tête d'épandage ou un élément qui lui est associé, est doté de moyens pour la mesure de paramètres physiologiques propres aux animaux tels que la température corporelle de ces derniers, ces moyens étant connectés à l'unité de contrôle et de commande. De cette façon il est possible de détecter, de manière relativement précoce, l'apparition de foyers infectieux.

Selon encore une autre caractéristique de l'invention, la tête d'épandage ou un élément qui lui est associé, est doté d'un moyen de pesage individuel des animaux. Ainsi il est possible pour une population donnée d'établir plusieurs mesures de poids et d'établir une moyenne propre à la population.

### Description sommaire des figures et des dessins.

D'autres avantages et caractéristiques de l'invention apparaîtront à la lecture de la description d'une forme préférée de réalisation donnée à titre d'exemple non limitatif en se référant aux dessins annexés en lesquels :
- la figure 1 est une vue schématique d'une installation d'épandage selon l'invention,
- la figure 2 est une vue de détail montrant l'un des aiguillages que comporte le rail de guidage,
- la figure 3 est une vue montrant divers équipement porté par un support associé à la tête d'épandage,
- les figures 4 à 12 sont des vues de différentes formes de réalisation de la tête d'épandage.
- la figure 13 montre une forme simplifiée d'un moteur d'actionnement alimenté à partir de l'énergie cinétique du produit et de l'air de transport issus de la conduite d'alimentation en produit,
- les figures 14 et 15 montrent une goulotte support de conduite selon une première forme de réalisation,
- la figure 16 montre une goulotte support de conduite selon une deuxième forme de réalisation,
- la figure 17 montre une goulotte support de conduite selon une troisième forme de réalisation,
- la figure 18 montre un agencement de rail de guidage selon une autre forme de réalisation,
- la figure 19 montre un agencement d'alimentation sélective en produit de litière de plusieurs tête d'épandage,
- la figure 20 montre une tête d'épandage avec moyen de nettoyage.

### Meilleure manière de réaliser l'invention

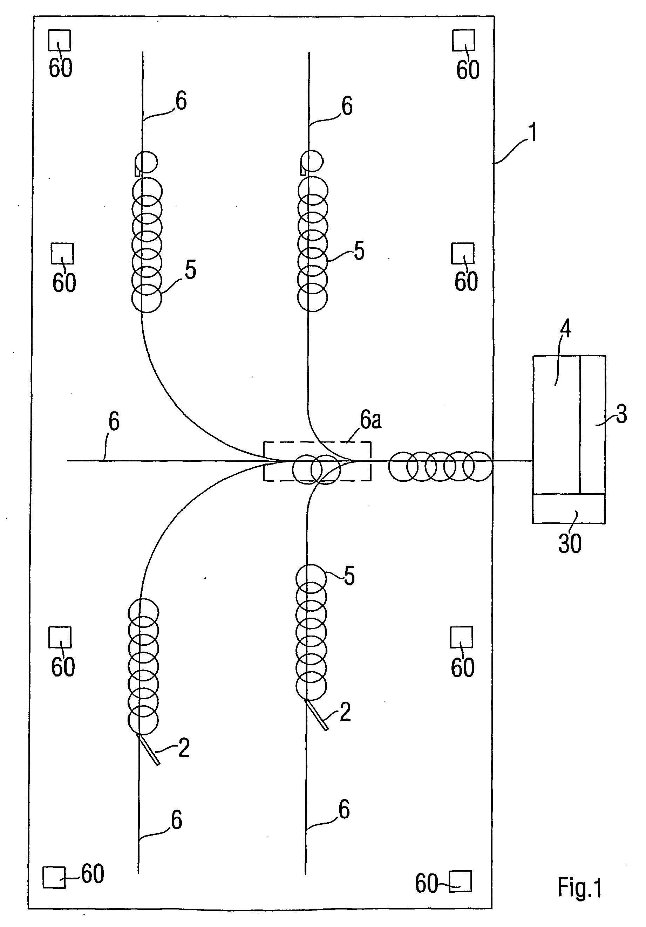

En figure 1 est représentée de manière schématique une installation selon l'invention pour l'épandage contrôlée de produits de litières tels que pailles, sciures, copeaux de bois et autres sur une aire d'élevage formée dans un local d'élevage 1.

Cette installation comporte :
- une tête d'épandage 2 de produits de litière installée dans le local d'élevage,
- des moyens de déplacement de la tête 2 d'épandage dans le local d'élevage, selon un trajet préétabli,
- une réserve 3 de produits de litière, installée à poste fixe à distance de la tête d'épandage 2,
- un moyen 4 de manutention pneumatique raccordé d'une part à la réserve 3 de produits de litière et d'autre part à la tête d'épandage 2 pour transporter les produits contenus dans la réserve 2 vers la tête d'épandage, ce moyen comportant une conduite souple 5 d'alimentation de la tête d'épandage 2 en produit de litière ainsi qu'un sas de mise en pression, interposé entre la réserve 3 de produit et la conduite souple 5. Ce sas, non représenté, à pour but d'assurer l'isolation entre les zones à pression atmosphérique et les zones sous pression d'air de transport. La zone à pression atmosphérique est notamment constituée par la réserve 3 de produit.

L'installation comporte une unité centrale de contrôle et de commande 30, connue en soi. Cette unité 30 peut être un automate programmable ou bien un micro-ordinateur. Cette unité 30 peut être embarquée sur la tête d'épandage ou bien être installée sur la partie à poste fixe de l'installation d'épandage.

Cette unité de contrôle et de commande 30 est connectée électriquement par voie filaire ou hertzienne à la tête d'épandage 2, aux moyens de déplacement sur le rail 6 et au moyen de manutention 4, et est apte à piloter la tête d'épandage dans ses différents mouvements ainsi que le moyen de manutention 4.

On peut voir sur cette figure 1 que la tête d'épandage 2 est disposée dans le local alors que la réserve 3 et le moyen 4 de manutention pneumatique et les éventuels moyens de dévoutage associés à la réserve, sont externes au local 1.

Cette disposition permet, dans la mesure où la partie à poste fixe de l'installation possède un moteur thermique, de réduire les risques de pollution du local avec des gaz nocifs et les risques d'incendie par contact des produits de litière avec les parties chaudes du moteur thermique ou bien avec la calamine transportée par les gaz d'échappement.

Le moyen 4 de manutention pneumatique comportera une source d'air sous pression apte à générer un flux d'air de transport, sous pression dans la conduite 5 et un organe apte à recevoir les produits de la réserve et à les introduire dans le flux d'air de transport, cet organe étant notamment constitué par le sas précité. De tels organes peuvent être du type écluse ou bien être constitué par un transporteur conforme à celui décrit dans la demande de brevet FR 07/01243 du 21/02/07 des demandeurs. Il va de soi que tout autres organes et moyens pourront être utilisés.

La tête d'épandage 2 est déplaçable le long d'au moins un rail de guidage 6 et comporte au moins un organe moteur 7 apte à assurer son déplacement le long de ce rail, cet organe moteur 7 étant piloté par l'unité de contrôle et de commande.

Il a lieu de noter que plusieurs têtes d'épandage 2 pourront être installées sur le rail de guidage 6.

Avantageusement la hauteur de la tête d'épandage 2 par rapport au sol est ajustable. À cet effet cette tête d'épandage, est portée par un support mobile verticalement et solidarisé à un organe moteur d'entraînement en translation selon un axe vertical, ledit moteur étant piloté par l'unité de contrôle et de commande.

En raison de cette disposition, la tête d'épandage 2 pourra être disposée selon un niveau de hauteur supérieur pour par exemple projeter le produit de litière au-dessus des obstacles présents dans le local d'élevage, tels que parois de séparations et autres, mais aussi pourra être disposée selon un niveau de hauteur relativement bas, proche du sol en vue par exemple de projeter de la litière sous des obstacles tels qu'abreuvoirs, alimentateurs, niches et autres.

Le rail de guidage 6, selon une première forme de réalisation, est installé au-dessus du sol et à distance de ce dernier. Cette disposition, combinée à la possibilité d'ajuster la hauteur de la tête par rapport au sol permet l'évolution de la tête d'épandage au-dessus des obstacles présents dans le local d'élevage.

En raison de son faible poids, la tête d'épandage 2 n'applique aucune surcharge significative sur le rail de guidage 6. Ainsi aucune modification relative au renforcement de la structure qui supporte le rail 6 ne sera requise. De plus le rail de guidage pourra être allégé de manière significative. Ces avantages se traduiront par un coût d'installation particulièrement faible en regard des solutions de l'état de la technique.

Selon une autre forme de réalisation, le rail de guidage 6 est disposé sur le sol dans la mesure où la topologie du local le permet.

Tel que représenté en figure 1, le rail 6 comprend au moins un tronçon central de rail auquel est raccordé au moins un tronçon latéral de rail par l'intermédiaire d'un aiguillage 6a solidarisé à un organe moteur du genre vérin par exemple, piloté par l'unité centrale dé contrôle et de commande 30. Il est donc possible par ce biais de déplacer la tête d'épandage vers différentes zones du local.

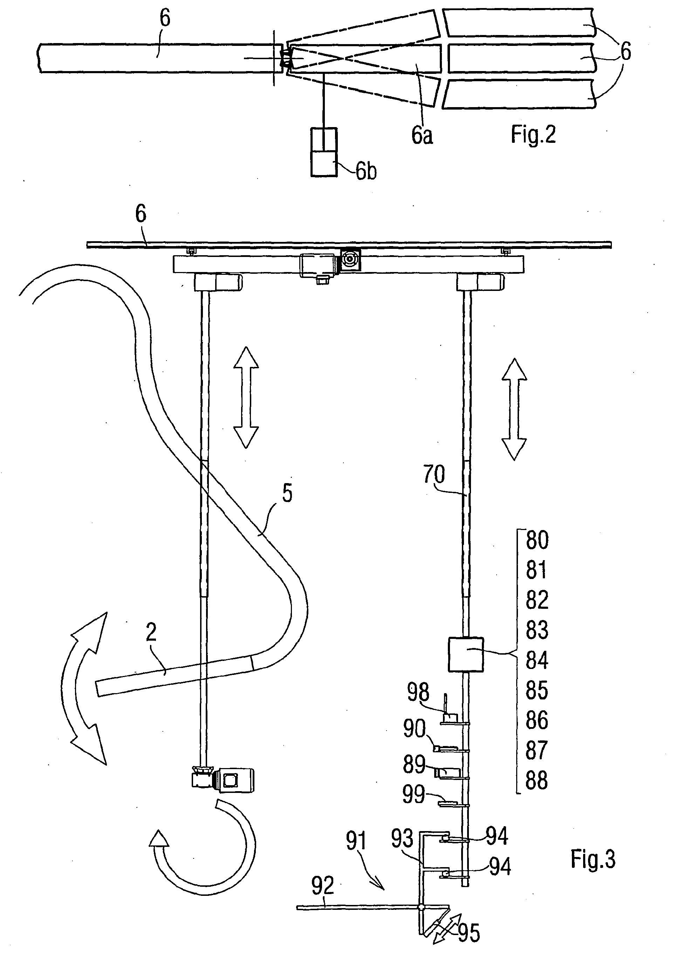

Comme on peut le voir sur la figure 2, le tronçon central de rail 6 présente une première partie de tronçon de rail et une seconde partie de tronçon de rail distante de la précédente et axialement alignée avec cette dernière. Chaque tronçon latéral de rail présente un coude d'extrémité et vient se disposer par l'extrémité de ce coude latéralement à la seconde partie de tronçon de rail. L'aiguillage 6a est constitué par un segment de rail articulé à la première partie de tronçon central de rail et assurant par mise en position par pivotement soit la jonction entre les deux parties de tronçon central de soit entre la première partie de tronçon central de rail et l'un des tronçons latéraux de rail. Le pivotement de l'aiguillage 6a est opéré par un organe moteur 6b qui lui est lié. Cet organe moteur est de préférence constitué par un vérin.

On peut voir sur les figures 3 à 12 que la tête d'épandage 2 est suspendue au rail horizontal 6 installé au-dessus du sol et à distance de dernier définissant les différents trajets possibles de la tête d'épandage 2 dans le local 1. Comme dit précédemment Ce rail 6 constitue l'un des éléments du moyen de déplacement de la tête 2 dans le local 1, l'un des autres éléments étant constitué par un organe moteur 7 équipant la tête d'épandage 2 et qui assure le déplacement de cette dernière le long du rail 6. On peut voir sur les figures 2 à 4 que l'organe moteur 7 est porté par une platine 20 solidaire de la tête 2. Cette platine comporte des galets support, engagés dans le rail de guidage et venant rouler sur une piste interne que ce dernier comporte. L'organe moteur 7 entraîne de préférence un galet de friction amené en appui contre le rail 6. Cet organe moteur est piloté par voie filaire ou hertzienne par l'unité de contrôle et de commande 30.

Avantageusement, l'installation d'épandage comporte des moyens de repérage de la position spatiale de la tête d'épandage 2 dans le local d'élevage, ces moyens étant électriquement connectés à l'unité centrale de contrôle et de commande 30.

Ces moyens pourront être constitués par des capteurs de position embarqués sur la tête d'épandage 2.

Selon une autre forme d'exécution, ces moyens sont constitués par des balises 60 réparties dans le local d'élevage et apte à délivrer à l'unité de contrôle et de commande une information relative à la position de la tête d'épandage 2, la position spatiale de la tête d'épandage étant calculée par triangulation, par ladite unité de contrôle et de commande 30.

Selon une autre forme de réalisation, la position spatiale de la tête d'épandage 2 est donnée par un récepteur de données émises par un système de géo-localisation par satellite, ledit récepteur étant embarqué sur la tête d'épandage 2 et étant connecté électriquement à l'unité de contrôle et de commande 30.

Le local peut être découpé en zones et l'installation selon l'invention peut être dotée de moyens d'évaluation en continu de la qualité de la litière dans chaque zone, ces moyens étant notamment aptes, pour chaque zone du local, à mesurer la température de la litière et son degré d'humidité. Ces moyens sont équipés de capteurs 80, 81 appropriés de mesure de température et de mesure du taux d'humidité connectés à l'unité de contrôle et de commande 30, ces capteurs 80, 81, selon la forme préférée de réalisation, sont embarqués sur la tête d'épandage 2 ou sur un élément 70 qui lui est associé par exemple un support. En figure 3 est représentée une tête d'épandage 2 à laquelle est associé un support 70 sous forme de bras vertical télescopique associé à un organe moteur apte à assurer son déploiement ou sa rétraction. On observe que ce support 70 est doté d'un capteur 80 et d'un capteur 81.

L'installation peut être dotée aussi de moyens de mesure de paramètres propres à l'ambiance du local tel que le taux d'ammoniac dans l'atmosphère du local, le taux de gaz carbonique dans l'atmosphère du local, du taux d'oxygène dans l'atmosphère du local, du taux d'azote dans l'atmosphère du local, du taux de poussières dans l'atmosphère du local, de la température de l'atmosphère du local, du degré d'humidité de l'atmosphère du local, et la vitesse de l'air dans le local. Ces moyens seront dotés de capteurs 82 de mesure du taux d'ammoniac, 83 de mesure du taux de gaz carbonique, 84 du taux d'oxygène, 85 du taux d'azote, 86 du taux de poussières, 87 du taux d'humidité et 88 de la vitesse de l'air. Ces capteurs 82 à 88 sont connectés à l'unité de contrôle et de commande 30 et pourront être embarqués sur le support 70 de la tête d'épandage 2 comme représenté en figure 3 ou bien installés à poste fixe dans le local.

La tête d'épandage 2 ou un élément qui lui est associé en l'espèce le support 70 pourra porter des moyens de surveillance à distance de la population animale du local d'élevage, ces moyens seront du type audio et/ou vidéo et seront constitués par au moins une caméra vidéo orientable 89 avec zoom réglable à distance et par au moins un microphone 90. La surveillance pourra être effectuée à distance depuis un poste de surveillance par un personnel affecté à cette tâche. La surveillance pourra concerner plusieurs locaux d'élevage.

La surveillance pourra être effectuée de manière automatique par des moyens informatiques intégrant des micro-ordinateurs et des logiciels d'analyse d'image.

La tête d'épandage 2 ou un élément qui lui est associé par exemple le support télescopique 70, comme représenté en figure 3, pourra porter des moyens pour la mesure de paramètres physiologiques propres aux animaux tels que la température corporelle de ces derniers, ces moyens étant connectés à l'unité de contrôle et de commande. Ces moyens pourront comprendre des capteurs infrarouges 96 ou des caméras thermique 97.

De plus la tête d'épandage 2 ou un élément qui lui est associé par exemple le support 70 comme représenté en fig.3, pourra être dotée d'un moyen 91 de pesage individuel des animaux, connecté à l'unité de contrôle et de commande 30. Ainsi il est possible pour une population donnée d'établir plusieurs mesures de poids et d'établir une moyenne propre à la population. Ce moyen de pesage 91 pourra être constitué d'un plateau peseur 92 solidaire d'une structure porteuse 93 reposant sur des bras du support 70 par l'intermédiaire d'au moins un capteur d'effort 94. Le plateau peseur pourra être attractif pour l'animal à peser afin que ce dernier puisse y monter de son propre gré. Le plateau peseur 92 pourra être articulé à la structure porteuse 93 et maintenu en position angulaire adéquate par un organe moteur 95 du genre vérin. De cette façon, après la pesée, par action de l'organe moteur, le plateau pourra être animé d'un mouvement d'oscillation de vitesse et d'amplitude suffisamment lentes pour ne pas blesser l'animal et l'effrayer mais suffisantes pour forcer l'animal à quitter le plateau peseur. S'agissant de volatiles tels que volailles ou palmipèdes, le plateau peseur pourra se présenter sous la forme d'un perchoir.

La tête d'épandage 2 ou un élément qui lui est associé par exemple le support 70, comme représenté en figure 3, pourra être doté d'un élément 98 de détection de puce RFID intégrant des moyens de lecture de cette dernière, cet élément de détection et de lecture étant connecté à l'unité de contrôle et de commande 30. Par ce moyen il sera possible, dans la mesure où chaque animal sera équipé d'une puce RFID de rechercher parmi la population animale du local un individu particulier et de le surveiller pendant une phase critique de son existence. À titre d'exemple cet animal peut être femelle dont les prémices d'une mise à bas éminente doivent être surveillés. Cette surveillance pourra être effectuée à distance à l'aide de la caméra vidéo 89.

La tête d'épandage 2 ou un élément qui lui est associé par exemple le support 70, comme représenté en figure 3, pourra être doté d'un transducteur électro acoustique 99 du genre haut-parleur pour diffuser des sons ou des airs de musiques. Il a été observé que la diffusion d'airs dé musique est de nature à apaiser la population animale.

Dans la même optique la tête d'épandage ou un élément qui lui est associé par exemple le support 70 pourra porter un mannequin non représenté imitant une personne et préférentiellement l'éleveur, ce mannequin pouvant être animé et posséder des membres articulés mobilisés par des moteurs internes commandés par l'unité de contrôle et de commande. Ce mannequin sera habillé avec des habits similaires vêtements de travail de l'éleveur. En outre un enregistrement audio reproduisant la voix de l'éleveur pourra être diffusé. Il a été observé que ces dispositions procurent aussi un effet d'apaisement sur la population animale.

La tête d'épandage 2 de la litière est selon une première forme de réalisation constituée par un canon mobile accouplé à au moins un organe moteur d'entraînement qui l'entraîne selon au moins un mouvement d'épandage circulaire ledit moteur étant piloté de préférence par l'unité de contrôle et de commande.

Le mouvement d'épandage circulaire du canon pourra s'effectuer selon un axe vertical ou selon une variante selon un axe horizontal. Ce mouvement d'épandage circulaire peut être un mouvement de rotation ou bien un mouvement d'oscillation.

La position angulaire du canon pourra être repérée par des capteurs angulaires et l'information en résultant pourra être transmise à l'unité de contrôle et de commande. S'agissant d'un mouvement d'oscillation, la position angulaire médiane du canon pourra être donnée par l'unité centrale de commande, cette position angulaire médiane dépendant de la position spatiale du canon dans le local d'élevage. L'amplitude du mouvement d'oscillation du canon sera donnée par l'unité de contrôle et de commande et ce en relation avec la position spatiale du canon dans le local d'élevage.

L'inclinaison du canon par rapport à l'horizontale pourra être modifiable en relation avec la position spatiale du canon dans le local d'élevage. De cette manière, la distance d'épandage pourra être modifiée.

Le canon pourra être accouplé à un organe moteur piloté par l'unité de contrôle et de commande, cet organe moteur modifiant l'inclinaison du canon et assurant, après modification de cette inclinaison, le maintien du canon en position.

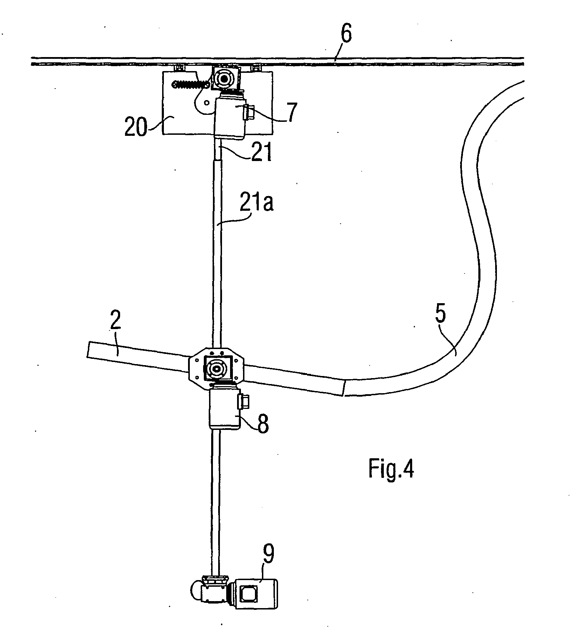

La figure 4 illustre la forme de réalisation précédemment décrite de la tête d'épandage. On observe sur cette figure un canon de projection mobile porté à distance de la platine 20 et sous cette dernière par une perche verticale 21 de préférence télescopique pouvant se déployer ou se rétracter sous l'action d'un organe moteur non représenté, afin d'ajuster la hauteur du canon par rapport au sol. Cet organe moteur est piloté par l'unité de contrôle et de commande. On remarque également que le canon 2 est monté de manière inclinable par rapport à l'horizontale sur une platine support, fixée à un tube fourreau 21 a monté en rotation sur la perche verticale 21. On remarque également que le canon 2 est accouplé à un moteur d'inclinaison 8 piloté par l'unité de contrôle et de commande. Ce moteur 8, fixé à la platine support, modifie l'inclinaison du canon et maintien ce dernier dans la position choisie.

En extrémité inférieure, la perche porte un moteur 9 destiné à entraîner le canon en pivotement ou en rotation par rapport à un axe vertical. À cet effet l'arbre de sortie du moteur est accouplé à au tube fourreau 21a. D'autres modes d'entraînement pourront être utilisés. Le moteur 9 est piloté par l'unité centrale de contrôle et de commande.

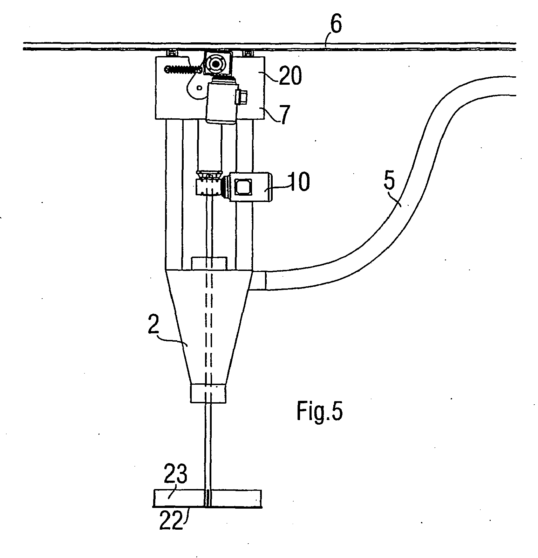

Selon une autre forme de réalisation telle que représentée en figures 5 à 12, la tête d'épandage 2 comprend au moins un élément rotatif de projection, accouplé à un organe moteur d'entraînement en rotation, sur lequel les produits à épandre sont déversés. Ces produits peuvent être directement déversé sur l'élément rotatif par un cyclone de distribution que présente la tête d'épandage, alimenté par la conduite d'alimentation 5, et positionné de façon que son ouverture de distribution soit au-dessus du ou des élément(s) rotatif(s). Alternativement les produits à épandre sont directement déversés sur l'élément rotatif de projection par la conduite souple d'alimentation 5

Chaque élément rotatif de projection peut être constitué par un disque horizontal entraîné en rotation dans un plan préférentiellement horizontal. Le ou chaque disque de projection sera doté de palettes radiales de dispersion.

Alternativement chaque élément rotatif de projection peut être constitué par un rotor entraîné en rotation ce rotor étant doté d'éléments radiaux de projection tels que pales de projection, doigts de projection ou peigne.

En figure 5 est illustrée une tête d'épandage selon la deuxième forme de réalisation. Cette tête d'épandage est constituée par un cyclone connu en soi. On remarque que sous le cyclone en regard de son ouverture de délivrance des produits est installé au moins un élément rotatif de projection 22 formé d'un disque horizontal entraîné en rotation autour d'un axe vertical à partir d'un couple produit par un organe moteur 10 piloté par l'unité centrale de contrôle et de commande. On peut remarquer que l'organe moteur 10 est solidaire d'une structure porteuse fixée à la platine 20. On remarque également que l'organe moteur est accouplé à un arbre vertical de transmission fixé au plateau 22 afin d'entraîner ce dernier en rotation.

Avantageusement, le disque horizontal 22 est doté de palettes radiales 23 de dispersion.

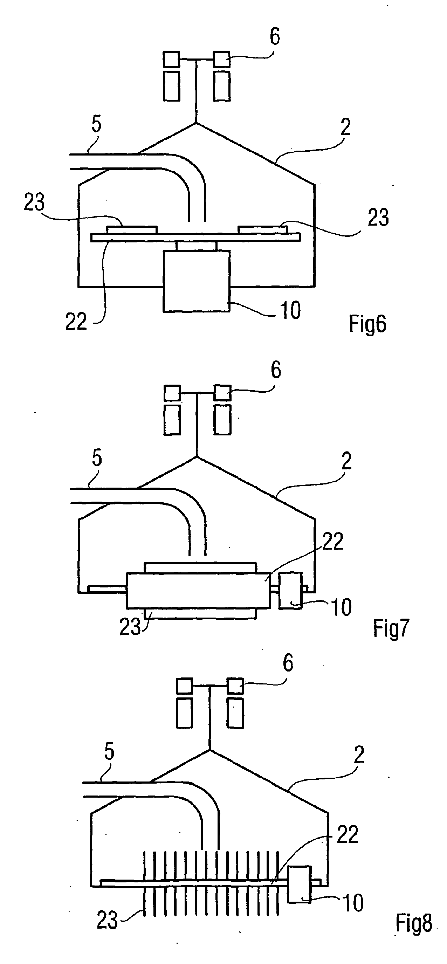

En figure 6 est représentée une tête d'épandage avec disque 22 de projection. On observe sur cette figure que la tête d'épandage comprend une structure porteuse formant deux bras, supportant en extrémité inférieure un moyen de projection rotatif constitué par au moins un disque horizontal 22 doté de palettes radiales 23 de projection, entraîné en rotation autour d'un axe vertical par un organe moteur 10 porté par la structure de bras. On observe également sur cette figure que la conduite 5 d'alimentation par son orifice de délivrance des produits se situe au-dessus du disque de projection 22 par exemple au dessus de la zone centrale de ce dernier de façon que les produits délivrés puissent s'écouler vers le disque et être projetés par ce dernier.

Selon une variante d'exécution le ou chaque élément rotatif de projection 22 est constitué par un rotor horizontal entraîné en rotation selon un axe horizontal, ledit rotor étant muni de doigts radiaux de projection ou de palettes de projection. Le ou chaque élément rotatif de projection sera constitué par un ou plusieurs peignes entraînés en rotation par l'organe moteur selon un axe horizontal.

Cette variante d'exécution est notamment illustrée en figures 7 et 8. Sur ces figures sont représentées une tête d'épandage 2 avec rotor de projection selon deux formes de réalisation. On observe sur ces figures que la tête d'épandage 2 comporte une structure porteuse sous forme de bras portant en extrémité inférieure un moyen de projection rotatif sous forme de rotor, entraîné en rotation selon un axe horizontal par un organe moteur. On observe également que la conduite d'alimentation 5, par son orifice de délivrance est disposée au-dessus du moyen de projection afin que les produits qu'elle délivre puissent s'écouler vers le moyen de projection et soient projetés par ce dernier.

On observe sur ces figures que le moyen de projection sous forme de rotor 22 est constitué par un moyeu accouplé à l'organe moteur auquel moyeu est fixé au moins un élément radial de projection. Cet élément radial de projection ou chaque élément radial de projection peut être constitué par une palette comme montré en figure 7 ou bien par une série de doigts radiaux ou bien par des peignes comme représenté en figure 8.

Selon une autre forme de réalisation de la tête d'épandage, le ou les élément(s) rotatif(s) de projection est ou sont disposés dans une chambre et est ou sont associé(s) à au moins une conduite de projection pour projeter les produits dans la direction déterminée par la conduite, ladite conduite collectant les produits projetés par le ou les élément(s) rotatif(s).

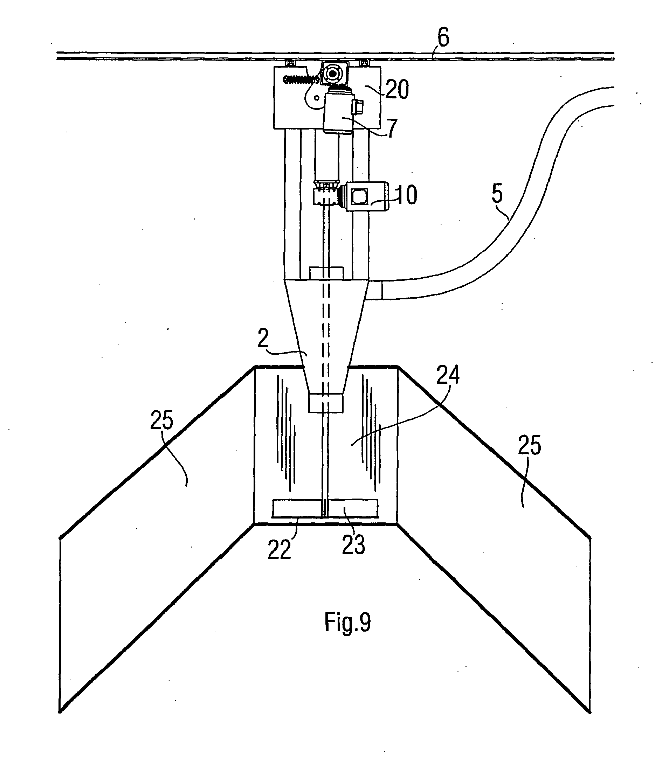

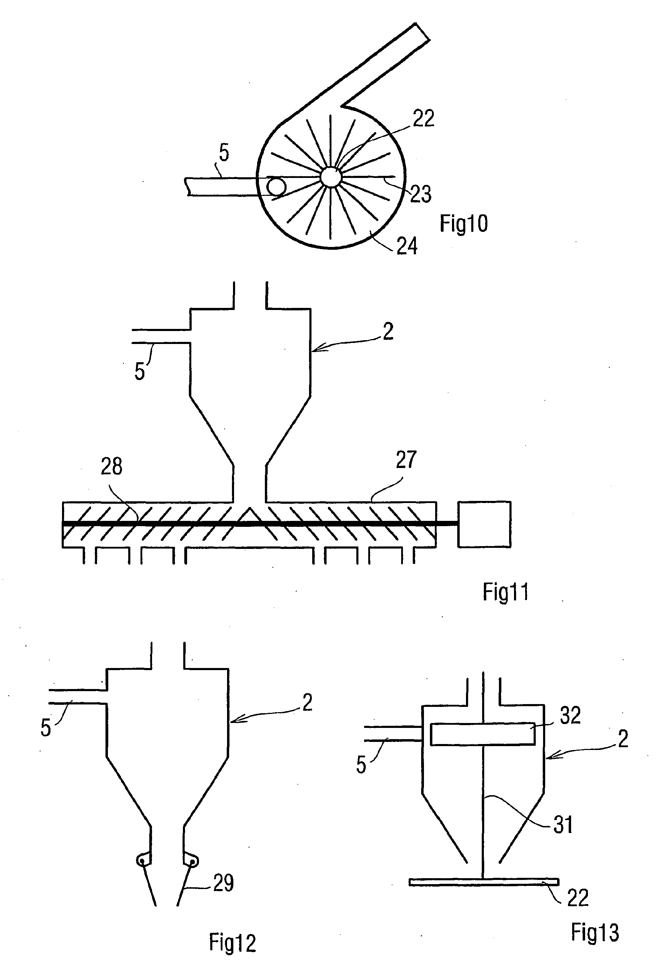

Une telle forme de réalisation est illustrée en figures 9 et 10. Sur la figure 9 on observe une tête d'épandage 2 du genre cyclone dont l'élément rotatif de projection 22 est disposé dans la chambre collectrice centrale 24 de deux conduites de projection 25 opposées. Il y lieu de noter que l'orientation et la largeur de chacune de ces conduites est réglable. Ces conduites seront formées par deux jupes opposées réunies l'une à l'autre par deux toiles souples opposées.

Sur la figure 10 on observe une tête d'épandage 2 orientable dotée d'un corps de tête 26 dans lequel est pratiquée une chambre cylindrique 24 de relative faible épaisseur dans laquelle est montée un rotor de projection 22 entraîné en rotation par un organe moteur 10. La chambre 24 possède une entrée de produit connectée à la conduite d'alimentation 5, et une sortie tangentielle de produit sous forme de conduite rigide 25. Le rotor de projection 22 est constitué par un moyeu engagé sur des paliers formés dans le corps de tête et des pales radiales 23 de projection du produit. Cette tête 2 peut occuper une position spatiale telle que l'axe de rotation du rotor soit vertical ou horizontal.

En figure 11 est représentée une tête d'épandage selon une autre forme de réalisation. On observe sur cette figure que la tête d'épandage 2 comprend une chemise rigide horizontale 27 dans laquelle est montée en rotation une vis d'Archimède 28 entraînée en rotation par un organe moteur non représenté, la chemise comportant un perçage radial d'alimentation en produit et plusieurs perçages radiaux de délivrance des produits répartis sur sa longueur. Le perçage radial d'alimentation pourra être en relation soit directement avec la conduite d'alimentation 5 ou bien selon la forme préférée de réalisation, avec la bouche de délivrance d'un séparateur du type cyclone alimenté par la conduite 5. Ce séparateur assurera la séparation entre l'air et les poussières d'une part et le produit à délivrer à la chemise d'autre part. L'air et les poussières seront évacués par une ouverture supérieure du cyclone.

Le perçage radial d'alimentation que comporte la chemise pourra être formé à une extrémité de cette dernière auquel cas la vis d'Archimède 28 sera à pas unique ou bien comme on peut le voir en figure 11, le perçage d'alimentation pourra être formé à distance des deux extrémités de la chemise 27, par exemple à mi distance, et la vis d'Archimède 28 comportera une section à pas à droite et une section à pas à gauche, les deux sections se rejoignant au droit de l'orifice d'alimentation.

En figures 12 est représentée une autre forme de réalisation de la tête d'épandage 2. On observe sur cette figure que la tête d'épandage 2 comprend au moins un cyclone pourvu d'au moins une descente afin de réaliser au moins un dépôt par gravité du produit de litière. Additionnellement, ce cyclone, sur le circuit de chute des produits, pourra être doté de volets réglables 29 afin d'ajuster la largeur du dépôt.

Les différents moteurs d'entraînement équipant la tête d'épandage, ou certains d'entre eux seulement ou bien encore l'un d'entre eux seulement seront du type pneumatique et pourront être alimentés par l'air sous pression de transport du produit de litière.

Cette disposition permet de simplifier notablement la tête d'épandage.

La figure 13 illustre une telle forme de réalisation. On observe sur cette figure une tête d'épandage 2 par exemple du genre cyclone dotée d'une entrée tangentielle de produit connectée à la conduite 5, d'une sortie supérieure d'air et de poussières et d'une sortie inférieure de produit placé au-dessus d'un élément de projection rotatif 22 porté par un arbre vertical d'entraînement 31 accouplé par son extrémité supérieure au niveau de l'entrée tangentielle, à une roue 32 à hélice ou à pales. Cette roue à hélice constitue une forme simplifiée d'un moteur. L'arbre 31 pourra être prolongé au delà de la roue 32 pour recevoir dans la sortie supérieure d'air un ventilateur pour accélérer l'air, cette sortie étant connectée à une conduite d'évacuation d'air vers l'extérieur.

En variante, les moteurs équipant la tête d'épandage ou certains d'entre eux seulement sont du type électrique ou hydraulique ou pneumatique.

S'agissant de moteur électrique ou hydraulique pneumatique, la source d'énergie d'alimentation de ces moteurs pourra être à distance de la tête d'épandage ou bien, en variante, être embarquée sur la tête d'épandage.

La conduite souple 5, en arrière de la tête d'épandage, pourra être suspendue à des chariots mobiles suiveurs non représentés, engagés sur le rail de guidage 6. Cette conduite pourra être disposée en sorte de former des volutes.

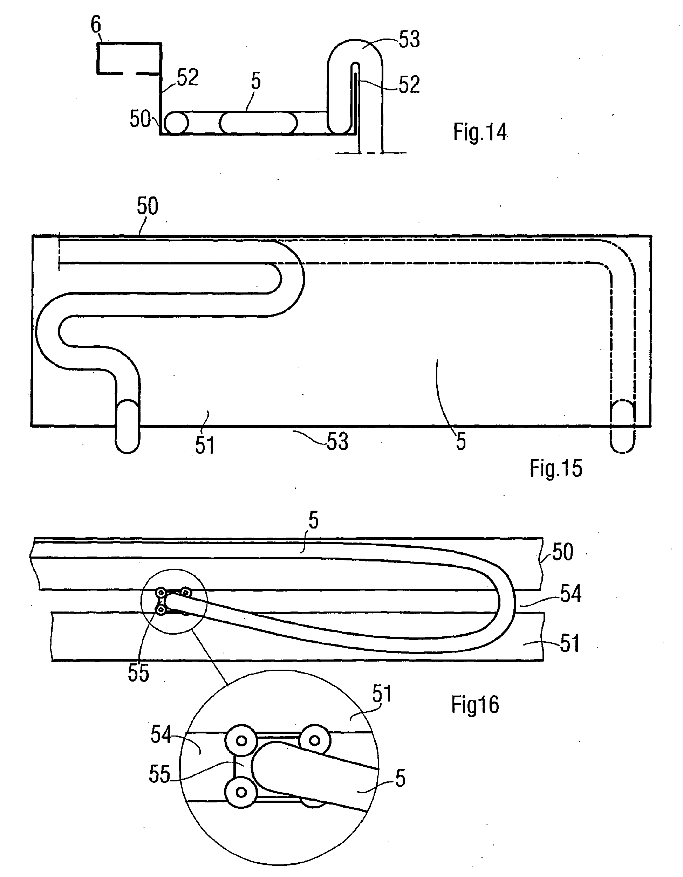

Selon une autre forme de réalisation telle que représentée en figures 14 et 15, la conduite d'alimentation 5 est portée par une goulotte horizontale 50 de réception, disposée de manière attenante au rail de guidage 6. Cette goulotte comporte une paroi de fond 51 sur laquelle repose à plat la conduite d'alimentation 5 et sur laquelle cette conduite peut glisser et au moins deux parois latérales verticales 52 assurant le maintien de la conduite d'alimentation 5 dans la goulotte 50. On peut remarquer que la paroi de fond 51 est plane et que la conduite est agencée sur cette dernière en boucle. Conformément à cette forme de réalisation, la conduite d'alimentation comporte en extrémité un coude rigide 53 par lequel elle chevauche l'une des parois latérales 52 et alimente la tête d'épandage. La conformation en boucle de la conduite d'alimentation 5 constitue une réserve de longueur. Le déplacement de la tête d'épandage 2 le long du rail 6 dans le sens de l'éloignement se traduira par le déploiement de la boucle tandis que le déplacement contraire se traduira par la reformation de cette boucle.

Selon une variante d'exécution représentée en figure 16, la paroi de fond 51 de la goulotte 50 comporte une fente longitudinale 54, de passage de la conduite d'alimentation 5 et de son coude 53 vers la tête d'épandage 2.

Selon cette forme de réalisation, la goulotte 50 est dotée d'un chariot 55 de guidage et de maintien de la conduite d'alimentation 5. Ce chariot 55 est guidé dans la fente 54. Ce chariot est traversé par la conduite d'alimentation 5.

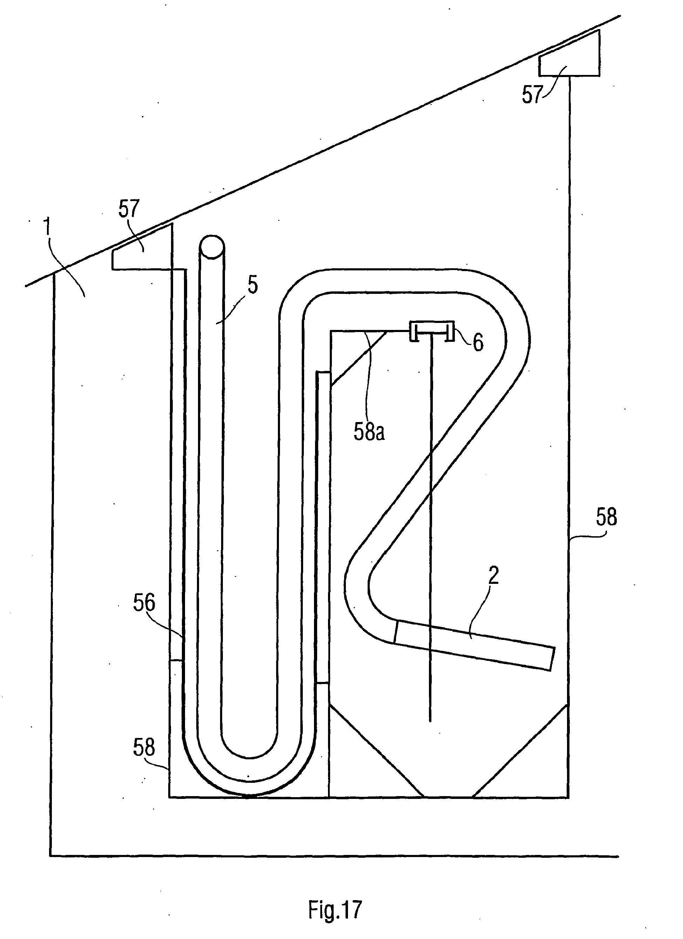

Selon une autre forme de réalisation représentée en figure 17, la conduite d'alimentation 5 comprend un segment de conduite horizontal rigide de longueur égale à la moitié de la distance que doit parcourir la tête et un segment de conduite souple de longueur égale à la moitié de la distance que doit parcourir la tête, ce segment de conduite souple étant connecté au segment rigide et étant disposé en une ou plusieurs boucles dans un support 56 sous forme de goulotte profonde constitué par une bâche fixée par ses deux bordures horizontales à des éléments support 58 espacés les uns des autres auxquels est fixé le rail de guidage 6, les éléments support étant fixés à des éléments longitudinaux 57 de la charpente du local 1. On observe sur cette figure que la goulotte 57 est latérale au rail de guidage et s'étend vers le bas. On observe également que pour être connecté à la tête d'épandage la conduite d'alimentation 5, par un coude rigide qu'elle présente, passe au dessus du rail 6. En raison de cette configuration la partie immédiatement au-dessus du rail doit être exempte de tout obstacle et pour cette raison, ce rail 6 est fixé en extrémité supérieure d'une forme de potence 58a que présente chaque élément support 58.

Selon une autre forme d'exécution non représentée, la conduite souple sera enroulée sur un rotor installé à poste fixe en extrémité amont du rail. Dans ce cas, la conduite est connectée au moyen de manutention pneumatique par un joint tournant associé au rotor.

Selon une variante d'exécution, le rotor est porté par la tête de d'épandage 2 et la conduite est connectée à la dite tête d'épandage 2 par un joint tournant associé au rotor.

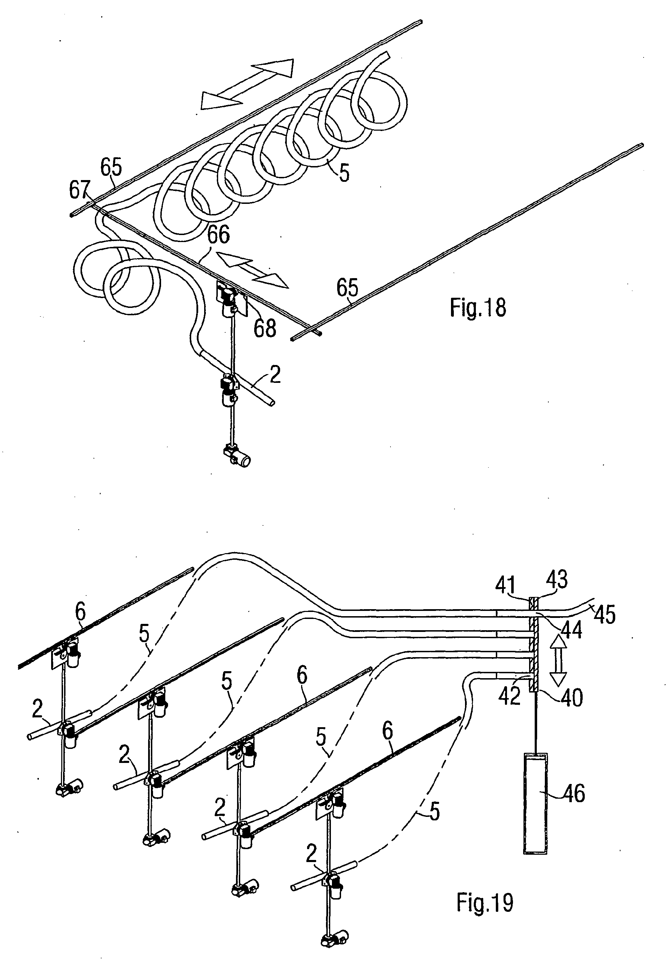

En figure 18 est représenté un agencement de rail 6 de guidage assurant des déplacements de la tête 2 dans le local selon deux directions orthogonales. On observe sur cette figure que cet agencement comprend une paire de rails 65 installés fixement dans le local d'élevage et au moins un second rail 66 porté par un chariot motorisé 67 mobile le long de la première paire de rail de guidage 65, la tête d'épandage 2 étant porté par un second chariot motorisé 68 mobile le long du rail de guidage 66. La conduite souple d'alimentation 5 sera porté par des chariots suiveurs engagés pour certains dans l'un des rails 65 de la première paire et pour les autres dans le rail 66.

On a précédemment décrit un moyen déplacement constitué d'un rail disposé en hauteur ou au sol et d'un moteur d'entraînement de la tête d'épandage le long du rail mais en variante ce moyen de déplacement de la tête d'épandage dans le local d'élevage pourra être constitué par un châssis automoteur portant la tête d'épandage, monté sur roues ou chenillettes et motorisées et guidé sur le sol du local.

La réserve 3 de produit sera avantageusement associée à un moyen de mesure de son poids, connecté à l'unité centrale de contrôle et de commande. Le poids de la réserve 3 est mesuré en permanence au cours de l'épandage de sorte qu'il est possible par dépesage de contrôler le débit de produit véhiculé par le moyen de manutention pneumatique et de piloter ce débit.

Le moyen de manutention pneumatique 4 pourra alimenter de manière sélective par l'intermédiaire d'un distributeur plusieurs têtes d'épandage. Une telle disposition est illustrée en figure 19. Sur cette figure on observe une installation d'épandage comportant plusieurs rails de guidage 6 portant chacun une tête d'épandage 2, les dites têtes d'épandage 2 étant connectées par les conduites 5 à un distributeur 40 constitué d'une platine 41 fixe, comprenant des perçages traversants 42 auxquels sont connectées les conduites souples 5, et d'une platine mobile 43 montée de manière glissante sur la platine fixe 41, ladite platine mobile 43 étant dotée d'un perçage traversant 44 raccordé à la conduite de délivrance de produits 45 que présente le moyen de manutention et ladite platine mobile étant déplaçable par un organe moteur 46 du genre vérin, afin que le perçage traversant qu'elle présente soit aligné avec l'un des perçages traversants de la platine fixe 41.

Enfin la tête d'épandage est équipée d'un avertisseur lumineux ou sonore afin de signaler aux occupants du local d'élevage, la mise en fonction de l'épandage.

En outre les différents cyclones que comporte l'installation pourront être dotés sur leur sortie d'air de moyens de filtration tel que manche filtrante.

La tête d'épandage 2 porte un moyen de nettoyage du local, ce nettoyage étant opéré par raclage ou balayage des surfaces souillées.

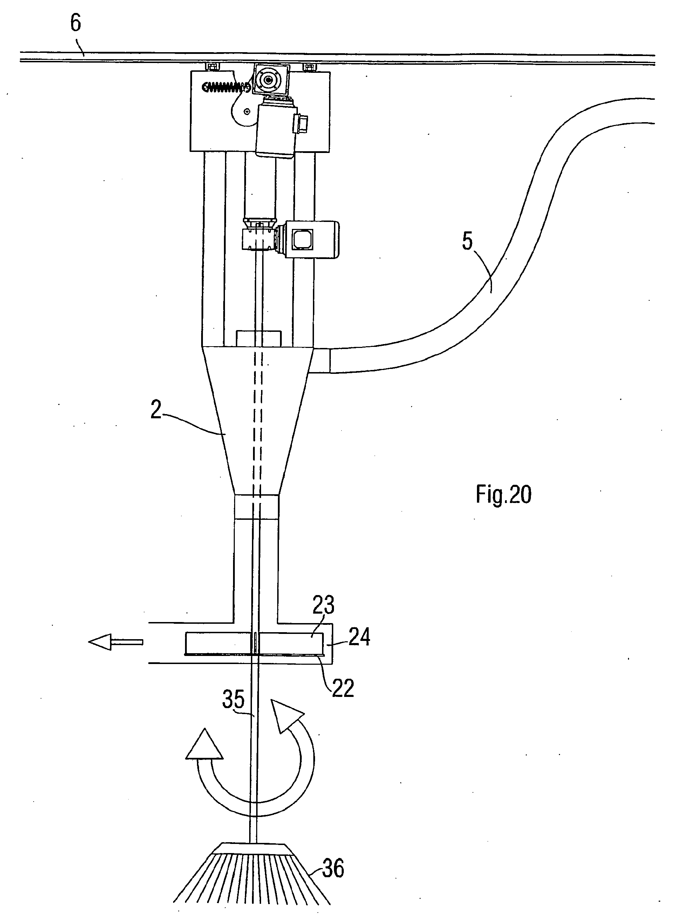

En figure 20 est représenté un exemple de réalisation d'une tête d'épandage 2 avec moyen de nettoyage. On observe sur cette figure une tête formée d'un cyclone comportant en partie inférieure sous la bouche de délivrance du cyclone d'un élément rotatif de projection 22 formé d'un disque. On observe que le disque porte un arbre vertical 35 s'étendant vers le bas, cet arbre vertical 35 étant doté en partie inférieure d'une brosse 36 de nettoyage prévue pour être appliquée sur la surface à nettoyer. Avantageusement l'arbre vertical 35 sera fixé de manière amovible à la tête d'épandage 2. Sur cette figure on peut voir que l'élément de projection 22 est disposé dans une chambre 24 formé dans un corps porté par le cyclone. On observe également que cette figure que la chambre 24 possède une entrée de produit en relation de communication avec la bouche de délivrance des produits que présente le cyclone et une sortie tangentielle de produit formée d'une conduite rigide sous forme de canon.

Enfin l'installation conforme à l'invention, sans sortir de l'esprit de la présente invention peut aussi être utilisée pour la distribution d'aliments pour animaux d'élevage ces aliments seront distribués par la tête d'épandage.

Il va de soi que la présente invention peut recevoir tous aménagements et variantes du domaine des équivalents techniques sans sortir du cadre du présent brevet.

## Revendications

1. Installation autonome d'épandage de produits de litière, sur une aire d'élevage **caractérisée en ce qu'**elle comprend :
- une tête d'épandage (2) de produits de litière installée dans le local d'élevage,
- des moyens de déplacement de la tête (2) d'épandage dans le local d'élevage, selon un trajet préétabli,
- une réserve (3) de produits de litière, installée à poste fixe à distance de la tête d'épandage (2),
- un moyen (4) de manutention pneumatique raccordé d'une part à la réserve (3) de produits de litière et d'autre part à la tête d'épandage (2) pour transporter les produits contenus dans la réserve (2) vers la tête d'épandage, ce moyen comportant une conduite (5) d'alimentation de la tête d'épandage (2) en produit de litière, et un sas de mise en pression et ce dit moyen étant installé à poste fixe à distance de la tête d'épandage.

2. Installation selon la revendication 1, **caractérisée par** une unité centrale de contrôle et de commande (30) connectée électriquement à la tête d'épandage, aux moyens de déplacement et au moyen de manutention (4), cette unité étant apte à piloter la tête d'épandage dans ces différents mouvements ainsi que le moyen de manutention.

3. Installation selon la revendication 2, **caractérisée en ce que** la tête d'épandage (2) de la litière est constituée par un canon mobile, accouplé à au moins un organe moteur d'entraînement selon au moins un mouvement d'épandage circulaire, ledit moteur étant piloté par l'unité de contrôle et de commande (30).

4. Installation selon la revendication précédente, **caractérisée en ce que** le mouvement d'épandage circulaire du canon (2) s'effectue selon un axe vertical ou horizontal, ce mouvement d'épandage circulaire est un mouvement de rotation ou d'oscillation.

5. Installation selon la revendication 2, **caractérisée en ce que** la tête d'épandage 2 comprend au moins un élément rotatif de projection (22), accouplé à un organe moteur (10) d'entraînement en rotation, sur lequel les produits à épandre sont déversés.

6. Installation selon la revendication précédente, **caractérisée en ce que** les produits de la litière sont déversés sur le ou les éléments rotatifs (22) directement par la conduite d'alimentation (5).

7. Installation selon la revendication 5 , **caractérisée en ce que** les produits de litière sont déversés sur le ou les éléments rotatifs par un cyclone de distribution que possède la tête d'épandage (2), l'ouverture de distribution de ce cyclone étant au-dessus du ou des élément(s) rotatif(s) (22).

8. Installation selon les revendications 5 à 7, **caractérisée en ce que** le ou les élément(s) rotatif(s) de projection (22) est ou sont associé(s) à au moins une conduite de projection (25) pour projeter les produits dans la direction déterminée par la conduite, ladite conduite collectant les produits projetés par le ou les élément(s) rotatif(s) (22).

9. Installation selon la revendication précédente, **caractérisée en ce que** l'élément rotatif de projection (22) de la tête d'épandage est disposé dans la chambre collectrice centrale (24) de deux conduites de projection (25) opposées.

10. Installation selon la revendication 8, **caractérisée en ce que** la tête d'épandage (2) est dotée d'un corps de tête (26) dans lequel est pratiquée une chambre cylindrique (24) dans laquelle est montée un rotor de projection (22) entraîné en rotation par un organe moteur (10), la chambre 24 possédant une entrée de produit connectée à la conduite d'alimentation (5), et une sortie tangentielle de produit sous forme de conduite rigide (25).

11. Installation selon l'une quelconque des revendications 5 à 10, **caractérisée en ce que** chaque élément rotatif de projection (22) est constitué par un disque horizontal entraîné en rotation dans un plan horizontal et doté de palettes radiales (23) de dispersion.

12. Installation selon l'une quelconque des revendications 5 à 10, **caractérisée en ce que** le ou chaque élément rotatif de projection (22) est constitué par un ou plusieurs peignes entraînés en rotation par l'organe moteur selon un axe horizontal.

13. Installation selon la revendication 2, **caractérisée en ce que** la tête d'épandage (2) comprend un cyclone pourvu d'au moins une descente afin de réaliser au moins un dépôt par gravité le produit de litière.

14. Installation selon l'une quelconque des revendications 1 ou 2, **caractérisée en ce que** la tête d'épandage (2) est constituée d'une chemise rigide horizontale (27) dans laquelle est montée en rotation une vis d'Archimède (28) entraînée en rotation par un organe moteur, ladite chemise comportant un perçage radial d'alimentation en produit et plusieurs perçages radiaux de délivrance des produits répartis sur sa longueur.

15. Installation selon la revendication précédente, **caractérisée en ce que** le perçage d'alimentation est formé à distance des deux extrémités de la chemise (27), et que la vis d'Archimède (28) comporte une section à pas à droite et une section à pas à gauche, les deux sections se rejoignant au droit de l'orifice d'alimentation.

16. Installation selon l'une quelconque des revendications 2 à 15, **caractérisée en ce que** la tête d'épandage (2), est déplaçable le long d'au moins un rail de guidage (6) et comporte au moins un organe moteur (7) apte à assurer son déplacement le long de ce rail cet organe moteur étant piloté par l'unité de contrôle et de commande (30).

17. Installation selon l'une quelconque des revendications 2 à 16, **caractérisée en ce que** la réserve (3) de produits est associée à un moyen de mesure de son poids, connecté à l'unité centrale de contrôle et de commande (30), le poids de la réserve étant mesuré en permanence au cours de l'épandage de sorte que par dépesage, le débit de produit véhiculé par le moyen de manutention pneumatique est contrôlé et piloté par ladite unité (30).

18. Installation selon l'une quelconque des revendications précédentes, **caractérisée en ce qu'**elle comporte de manière attenante au rail de guidage (6), une goulotte (50) de réception de la conduite d'alimentation 5, ladite goulotte comportant une paroi de fond (51) sur laquelle repose à plat la conduite d'alimentation (5) et au moins deux parois latérales verticales (52) assurant le maintien de la conduite d'alimentation (5) dans la goulotte (50), et que la conduite d'alimentation (5) comporte en extrémité un coude rigide (53) par lequel elle chevauche l'une des parois latérales (54) et alimente la tête d'épandage (2).

19. Installation selon la revendication 18, **caractérisée en ce que** la paroi de fond (51) de la goulotte comporte une fente longitudinale (54), de passage de la conduite d'alimentation (5) vers la tête d'épandage (2), et que la goulotte est dotée d'un chariot de guidage (55) de la conduite d'alimentation (5), ce chariot (55) étant guidé dans la fente (54) ledit chariot étant traversé par la conduite d'alimentation (5).

20. Installation selon l'une quelconque des revendications précédentes, **caractérisée en ce que** la tête d'épandage porte un moyen de nettoyage du local par raclage ou balayage des surfaces souillées, et que le moyen de nettoyage est une brosse (36).

21. Installation selon l'une quelconque des revendications précédentes, **caractérisée en ce que** le moyen de manutention pneumatique (4) alimente de manière sélective par l'intermédiaire d'un distributeur (40) plusieurs têtes d'épandage (2).

## Claims

1. An independent installation for spreading bedding material around a livestock rearing unit, **characterised in that** it comprises:
- A bedding material spreader head (2) installed within the livestock rearing unit,
- Various systems for moving the spreader head (2) along a pre-established route within the livestock rearing unit,
- A hopper (3) for bedding material, installed at a fixed point remote from the spreader head (2),
- A pneumatic mechanical handling system (4) connected between the bedding material hopper (3) at one end and the spreader head (2) at the other end in order to carry the material contained in the hopper (3) to the spreader head, which system includes a pipe (5) to supply the spreader head (2) with bedding material and a pressurising chamber, the said system being installed at a fixed point remote from the spreader head.

2. An installation as for Claim 1, **characterised by** a central command and control unit (30) connected electrically to the spreader head, the movement system and the mechanical handling system (4), this unit being able to operate the spreader head in its various movements as well as the mechanical handling system.

3. An installation as for Claim 2, **characterised in that** the bedding spreader head (2) is composed of a movable barrel coupled to at least one drive motor unit providing at least a circular spreading movement, the said motor being operated from the command and control unit (30).

4. An installation as for the preceding Claim, **characterised in that** the circular spreading movement of the barrel (2) is provided about a vertical or horizontal axis, the circular spreading movement being either rotary or oscillatory.

5. An installation as for Claim 2, **characterised in that** the spreader head (2) comprises at least one rotating projection element (22), coupled to a rotating drive motor unit (10), over which the material to be spread is discharged.

6. An installation as for the preceding Claim, **characterised in that** the bedding material is directly discharged over the rotating element(s) (22) by the supply pipe (5).

7. An installation as for Claim 5, **characterised in that** the bedding material is discharged over the rotating element(s) by a cyclone pump distributor on the spreader head (2), the distributor aperture for this cyclone pump being above the rotating element(s) (22).

8. An installation as for Claims 5 to 7, **characterised in that** the rotating projection element(s) (22) of the spreader head is/are associated with at least one projection pipe (25) in order to project the material in the direction defined by the pipe, the said pipe concentrating the material projected by rotating element(s) (22).

9. An installation as for the preceding Claim, **characterised in that** the rotating projection element(s) (22) of the spreader head is/are arranged within the central concentrating chamber (24) of two opposed projection pipes (25).

10. An installation as for Claim 8, **characterised in that** the spreader head (2) incorporates a head casing (26) containing a cylindrical chamber (24) within which is fitted a projection rotor (22) driven in rotation by a motor unit (10), the chamber (24) having an inlet for the material connected to the supply pipe (5) and a tangential material outlet in the form of a rigid pipe (25).

11. An installation as for any one of the Claims 5 to 10, **characterised in that** each rotating projection element (22) is composed of an horizontal disc driven in rotation in the horizontal plane and incorporating radial dispersion vanes (23).

12. An installation as for any one of the Claims 5 to 10, **characterised in that** the rotating projection element(s) (22) is/are composed of one or more combs driven in rotation by the motor unit around an horizontal axis.

13. An installation as for Claim 2, **characterised in that** the spreader head (2) comprises a cyclone pump provided with at least one down-pipe in order to provide at least one gravitational feed of bedding material.

14. An installation as for any one of Claims 1 or 2, **characterised in that** the spreader head (2) is composed of a rigid horizontal jacket (27) wherein is fitted a rotating Archimedes' screw (28) driven in rotation by a motor unit, the said jacket including a radial material feed orifice and several radial material delivery orifices spread along its length.

15. An installation as for the preceding Claim, **characterised in that** the feed orifice is formed at a distance from the two ends of the jacket (27) and that the Archimedes' screw includes a right-handed pitch section and a left-handed pitch section, the two sections meeting at the level of the feed orifice.

16. An installation as for any one of the Claims 2 to 15, **characterised in that** the spreader head (2) is movable along at least one guide rail (6) and includes at least one motor unit (7) able to ensure its movement along this rail, this motor unit being operated from the command and control unit (30).

17. An installation as for any one of the Claims 2 to 16, **characterised in that** the material hopper (3) is associated with a system for measuring its weight connected to the command and control unit (30), the weight of the hopper being continuously measured during the spreading operation such that, as it unloads, the flow rate of the material carried by the pneumatic mechanical handling system is controlled and operated from the said unit (30).

18. An installation as for any one of the preceding Claims, **characterised in that** it includes, attached to the guide rail (6), a tray (50) for holding the supply pipe (5), the said tray including a base-plate (51) on which the supply pipe (5) lies flat, and at least two vertical sidewalls (52) to keep the supply pipe (5) within the tray (50), and that the supply pipe (5) includes a rigid elbow (53) at one end by which it rides over one of the side walls (54) and feeds the spreader head (2).

19. An installation as for Claim 18, **characterised in that** the base-plate (51) of the tray includes a longitudinal slot (54) for the passage of the of the supply pipe (5) towards the spreader head (2), and that the tray incorporates a guide carriage (55) for the supply pipe (5), this carriage (55) being guided within the slot (54), the said carriage being traversed by the supply pipe (5).

20. An installation as for any one of the preceding Claims, **characterised in that** the spreader head carries a system for cleaning the premises by scraping or sweeping soiled surfaces, whereby the cleaning method is a brush (36).

21. An installation as for any one of the preceding Claims, **characterised in that** the pneumatic mechanical handling system (4) feeds several spreader heads (2) in some selective manner by means of a manifold (40).

## Patentansprüche

1. Autonome Anlage für die Ausbringung von Streuprodukten in Zuchtställen, **dadurch gekennzeichnet, dass** sie umfasst:
- einen im Stall installierten Streukopf (2) für die Ausbringung von Streuprodukten,
- Elemente für die Bewegung des Streukopfes (2) im Stall, entsprechend einer voreingestellten Bahn,
- ein Produkt-Reservoir (3) für Streuprodukte, das an einem festen Standort in einiger Entfernung des Streukopfes (2) aufgestellt ist,
- eine pneumatische Beförderungsvorrichtung (4), die zum einen mit dem Produkt-Reservoir (3) und zum anderen mit dem Streukopf (2) verbunden ist und dazu dient, die im Reservoir (3) enthaltenen Produkte zum Streukopf zu transportieren, wobei die Vorrichtung mit einem Zuführrohr (5) zum Streukopf (2) und einer Druckschleuse ausgestattet ist und an einem festen Standort in einiger Entfernung des Streukopfes aufgestellt ist.

2. Anlage nach Anspruch 1, **dadurch gekennzeichnet, dass** sie eine zentrale Kontroll- und Steuereinheit (30) umfasst, welche elektrisch mit dem Streukopf, den Bewegungselementen und der Beförderungsvorrichtung (4) verbunden ist und dazu dient, den Streukopf in seinen verschiedenen Bewegungen und die Beförderungsvorrichtung zu steuern.

3. Anlage nach Anspruch 2, **dadurch gekennzeichnet, dass** der Streukopf (2) für das Streuprodukt einen beweglichen Lauf umfasst, der mindestens an einen Antriebsmotor gekoppelt ist und mindestens eine kreisende Ausstreubewegung ausübt, wobei der Antriebsmotor über die Kontroll- und Steuerungseinheit (30) bedient wird.

4. Anlage nach dem vorangehenden Anspruch, **dadurch gekennzeichnet, dass** die kreisförmige Ausstreubewegung des beweglichen Laufs (2) in vertikaler oder horizontaler Achse und in rotierender oder schwingender Bewegung erfolgt.

5. Anlage nach Anspruch 2, **dadurch gekennzeichnet, dass** der Streukopf (2) mindestens ein rotierendes Projektionselement (22) umfasst, welches an einen rotierenden Antriebsmotor (10) gekoppelt ist, auf den die Streuprodukte geschüttet werden.

6. Anlage nach dem vorangehenden Anspruch, **dadurch gekennzeichnet, dass** die Streuprodukte direkt über das Zuführrohr (5) auf das oder die rotierende(n) Element(e) geschüttet werden (22).

7. Anlage nach Anspruch 5, **dadurch gekennzeichnet, dass** die Streuprodukte mittels Zyklon, der mit dem Streukopf (2) verbunden ist, auf das oder die rotierende(n) Element(e) geschüttet wird, wobei der Produktaustritt des Zyklons sich über dem oder den rotierenden Element(en) (22) befindet.

8. Anlage nach den Ansprüchen 5 bis 7, **dadurch gekennzeichnet, dass** das oder die rotierende(n) Projektionselement(e) (22) mit mindestens einer Projektionsleitung (25) verbunden ist/sind, um die Streuprodukte in der von der Leitung festgelegten Richtung auszustreuen, wobei diese Projektionsleitung die von dem oder den rotierenden Element(en) (22) ausgeworfenen Streuprodukte auffängt.

9. Anlage nach dem vorangehenden Anspruch, **dadurch gekennzeichnet, dass** das rotierende Projektionselement (22) des Streukopfes sich in der zentralen Sammelkammer (24) zwischen zwei gegenüberliegenden Projektionsleitungen (25) befindet.

10. Anlage nach Anspruch 8, **dadurch gekennzeichnet, dass** der Streukopf (2) einen Grundkörper (26) mit einer zylindrischen Kammer (24) umfasst, in der ein Schleuderrotor (22) montiert ist, welcher von einem Motor (10) angetrieben wird, wobei die Kammer (24) einen Produkteinlass besitzt, der mit einem Zuführrohr verbunden (5) ist, sowie einen tangentialen Produktauslass in Form einer starren Rohrleitung (25).

11. Anlage nach einem der vorangehenden Ansprüche 5 bis 10, **dadurch gekennzeichnet, dass** jedes rotierende Projektionselement (22) aus einer in der Horizontalebene rotierenden horizontalen Scheibe besteht und radiale Streuflügel (23) besitzt.

12. Anlage nach einem der vorangehenden Ansprüche 5 bis 10, **dadurch gekennzeichnet, dass** das oder jedes rotierende Projektionselement (22) einen oder mehrere Kämme umfasst, die von einem Antriebsmotor rotatorisch in horizontaler Achse angetrieben werden.

13. Anlage nach Anspruch 2, **dadurch gekennzeichnet, dass** der Streukopf (2) einen Zyklon mit mindestens einem Abgang umfasst, um aufgrund der Schwerkraft mindestens eine Streuablagerung zu erreichen.

14. Anlage nach einem der vorangehenden Ansprüche 1 oder 2, **dadurch gekennzeichnet, dass** der Streukopf (2) eine starre horizontale Verkleidung (27) umfasst, in die eine Förderschnecke (28) montiert ist, welche von einem Antriebsmotor in Rotation gebracht wird, wobei diese Verkleidung mit einer Radialbohrung für die Produktzuführung und mehreren Radialbohrungen auf der Längsseite für die "Produktausschüttung versehen ist.

15. Anlage nach dem vorangehenden Anspruch, **dadurch gekennzeichnet, dass** die Zuführbohrung sich entfernt von den beiden Enden der Verkleidung (27) befindet und dass die Förderschnecke (28) auf der einen Seite rechtslaufend und auf der anderen Seite linkslaufend ist, wobei die beiden Seiten auf Höhe der Öffnung für die Produktzufuhr zusammenlaufen.

16. Anlage nach einem der vorangehenden Ansprüche 2 bis 15, **dadurch gekennzeichnet, dass** der Streukopf (2) auf wenigstens einer Förderschiene (6) verschiebbar ist und mindestens einen Antriebsmotor (7) umfasst, der die Verschiebung auf dieser Schiene sicherstellt und von der zentralen Kontroll- und Steuereinheit (30) bedient wird.

17. Anlage nach einem der vorangehenden Ansprüche 2 bis 16, **dadurch gekennzeichnet, dass** das Produkt-Reservoir (3) ein Gewichtsmessungselement umfasst, das an die zentrale Kontroll- und Steuereinheit (30) angeschlossen ist, wobei das Gewicht des Reservoirs während des Streuvorgangs kontinuierlich gemessen wird. Der über die pneumatische Beförderungsvorrichtung ausgeübte Produktausstoß wird von oben genannter Einheit (30) kontrolliert und gesteuert.

18. Anlage nach einem der vorangehenden Ansprüche, **dadurch gekennzeichnet, dass** diese angrenzend an die Förderschiene (6) mit einer Rinne (50) für das Zuführrohr (5) ausgestattet ist, welche eine Bodenwand (51), auf der das Zuführrohr (5) flach aufliegt, und mindestens zwei vertikale Seitenwände (52) umfasst und die Stabilität des Zuführrohrs (5) in der Rinne (50) gewährleistet, und dass das Zuführrohr (5) an einem Ende eine starre Biegung (53) aufweist, da sich das Rohr um eine der vertikalen Seitenwände (54) legt, und den Streukopf (2) versorgt.

19. Anlage nach Anspruch 18, **dadurch gekennzeichnet, dass** die Bodenwand (51) der Rinne einen Längsschlitz (54) umfasst, durch den das Zuführrohr (5) zum Streukopf (2) läuft und dass die Rinne mit einem Förderwagen (55) für das Zuführrohr (5) ausgestattet ist, wobei dieser Förderwagen (55) sich entlang des Schlitzes (54) bewegt und vom Zuführrohr (5) durchquert wird.

20. Anlage nach einem der vorangehenden Ansprüche, **dadurch gekennzeichnet, dass** der Streukopf eine Vorrichtung für die Reinigung der Ställe durch Abschaben oder Fegen der verschmutzten Flächen umfasst, und dass das Reinigungselement eine Bürste (36) ist.

21. Anlage nach einem der vorangehenden Ansprüche, **dadurch gekennzeichnet, dass** die pneumatische Beförderungsvorrichtung (4) mehrere Streuköpfe (2) auf selektive Weise über einen Verteiler (40) versorgt.
